# EUROPEAN PATENT SPECIFICATION

(11) **EP 4 218 266 B1**
(45) Date of publication and mention of the grant of the patent: **06.11.2024**
(21) Application number: 21840259.2
(22) Date of filing: 07.12.2021
(51) Int. Cl.: H04W 4/02

(54) **MULTIPATH AUTOBOUNCE LOCATION DETERMINATION**
MEHRWEG-AUTOBOUNCE-STANDORTBESTIMMUNG
DÉTERMINATION DE LA LOCALISATION AUTOBOUNCE PAR TRAJETS MULTIPLES

(43) Date of publication of application: 02.08.2023
(73) Proprietor: Google LLC, Mountain View, CA 94043 (US)
(72) Inventor: SHIN, Dongeek, Mountain View 94043 (US)
(74) Representative: Kennedy, Richard E.
(86) International application number: PCT/US2021/062231
(87) International publication number: WO 2023/107101

(56) References cited:
- WO-A1-2020/098920
- US-A1- 2021 055 370
- US-A1- 2021 088 616

## Description

### BACKGROUND

Computing devices, especially portable or handheld devices, typically include a multitude of wireless transceivers, such as transceivers for GPS (global positioning system), Bluetooth^{®} LE (low energy), Wi-Fi^{®}, ZigBee^{®}, and Ultra-Wideband^{®}. As a result, tracking applications installed on these computing devices can utilize certain of these wireless technologies along with tracking tags or additional wireless nodes to provide a convenient way to track and locate tagged items. The tag may be active, semi active, or passive. A passive tag uses the incoming wireless signal from a reader to power the transmission of the tag's response. A semi-active tag is a medium range tag that uses its own power source (e.g., battery) to transmit to the reader but remains dormant until the reader sends an energizing signal to turn on its circuitry. An active tag is a long-range tag that has a transmitter and its own power source to run the tag's circuitry and to broadcast a signal to the reader. The active tag can either transmit continuously as beacons or when activated by the reader's signal.

WO 2020/098920 A1 discloses A technique for locating a target tag using a short range radio based positioning system comprising a plurality of localization components, wherein the target tag and the plurality of localization components are configured to perform ranging measurements among each other using short range radio technology. A method implementation of the technique is performed by an orchestration component of the positioning system and comprises sending, using long range radio technology, a ranging plan to the target tag and one or more of the plurality of localization components, the ranging plan instructing the target tag and the one or more of the plurality of localization components to perform, using the short range radio technology, ranging measurements among each other enabling to locate the target tag.

US 2021/055370 A1 discloses systems and methods for tracking a tagged object through a scene. Techniques are described to calculate a position of the tag using wireless communication with multiple anchor devices. In some examples, the anchor devices may be self-localizing, e.g., they may dynamically determine their position and relationship to one another. In some examples, position of a tag may be calculated by calculating multiple candidate positions using different localization techniques-such as geometric localization techniques and/or optimization-based techniques. An error may also be identified associated with each candidate position. A final position may be determined for the tag based on the errors associated with the candidate positions (e.g., the candidate position with the smallest error may be utilized as the position, e.g., the determined position, of the tag).

### SUMMARY

In general, techniques of this disclosure are directed to using wireless components of a computing device (e.g., smartphone) to broadcast encrypted data frames over a wireless signal (e.g., Ultra-Wideband^{®} (UWB)) to locate a target tag using responses from neighboring intermediate tags over one or combination of direct and indirect paths to determine the target tag distance and direction. The combined total range information from each indirect path and their respective intermediate tag responses provides for an improved range and localization result to the target tag over using just a single direct path to the target tag, or in some cases when the target tag is not reachable by the computing device. If the target tag is reachable (i.e., direct path), the computing device may use a target tag response along with the one or more indirect path responses to determine a potentially more accurate target tag distance and direction. A weight may be applied to one or more paths in a loss-function algorithm to further refine the results. The loss-function algorithm may be based on any one or combination of path parameters, such as the number intermediate tags, the number of hops to the target tag, number of indirect paths, or relative position of the intermediate tags to one or both of the target tag and the computing device.

The computing device may determine the initial target tag distance, if reachable, and each first-hop distance, corresponding to the distance from the computing device to at least some of the intermediate tags, based on a round-trip-time algorithm that determines round-trip-times (RTT) of the wireless signal associated with the broadcast data frame to and from the computing device to the target tag and each reachable intermediate tag.

As such, the techniques of this disclosure may take advantage of the concept of wisdom-of-crowds, in this case of neighboring intermediate tags. Each path from the computing device to each intermediate tag or target, and from each intermediate tag to the target, whether, direct or indirect, has a different noise and multipath profile, and thus when combining them as discussed herein, has the effect of mitigating noise and providing a more accurate estimate of target tag distance and direction from the computing device.

In one example, this disclosure describes a method according to claim 1.

In another example, a computing device according to claim 11.

In an additional example, a computer-readable storage medium according to claim 12.

The details of one or more examples of the disclosure are set forth in the accompanying drawings and the description below. Other features, objects, and advantages will be apparent from the description and drawings, and from the claims.

### BRIEF DESCRIPTION OF DRAWINGS

FIG. 1A is a conceptual diagram illustrating an example of a computing device that is configured to locate a target tag by communicating with neighboring intermediate tags proximate to the target tag.
FIG. 1B is a conceptual diagram illustrating another example of a computing device that is configured to locate a target tag by communicating with neighboring intermediate tags proximate to the target tag and the target tag.
FIG. 2 is a block diagram illustrating an example computing device, in accordance with one or more aspects of the present disclosure.
FIG. 3 is a diagram illustrating a parking area that includes a computing device, a plurality of intermediate wireless tags, and a wireless target tag, in accordance with one or more aspects of the present disclosure.
FIG. 4 is a flowchart illustrating an example mode of operation for a computing device to locate a target tag by communicating with neighboring intermediate tags proximate to the target tag, in accordance with one or more aspects of the present disclosure.

### DETAILED DESCRIPTION

Throughout the disclosure, examples are described where a computing device and/or a computing system analyzes information (e.g., wireless ID tags and respective information, locations, context, motion, etc.) associated with a computing device and a user of the computing device, only if the computing device receives permission from the user of the computing device to analyze the information. For example, in situations discussed below, before a computing device or computing system can collect or may make use of information associated with a user, the user may be provided with an opportunity to provide input to control whether programs or features of the computing device and/or computing system can collect and make use of user information (e.g., information about a user's or user device's current location, such as by GPS or wireless ID tag, etc.), or to dictate whether and/or how to the device and/or system may receive content that may be relevant to the user. In addition, certain data may be treated in one or more ways before it is stored or used by the computing device and/or computing system, so that personally identifiable information is removed. For example, a user's identity and image may be treated so that no personally identifiable information can be determined about the user, or a user's geographic location may be generalized where location information is obtained (such as to a city, ZIP code, or state level), so that a particular location of a user cannot be determined. Thus, the user may have control over how information is collected about the user and used by the computing device and computing system.

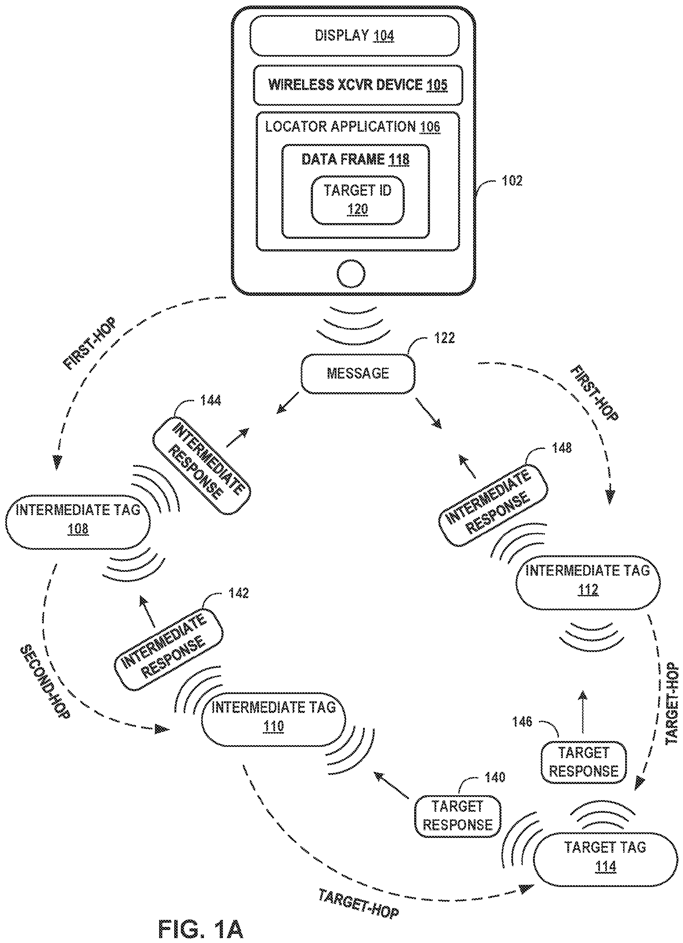

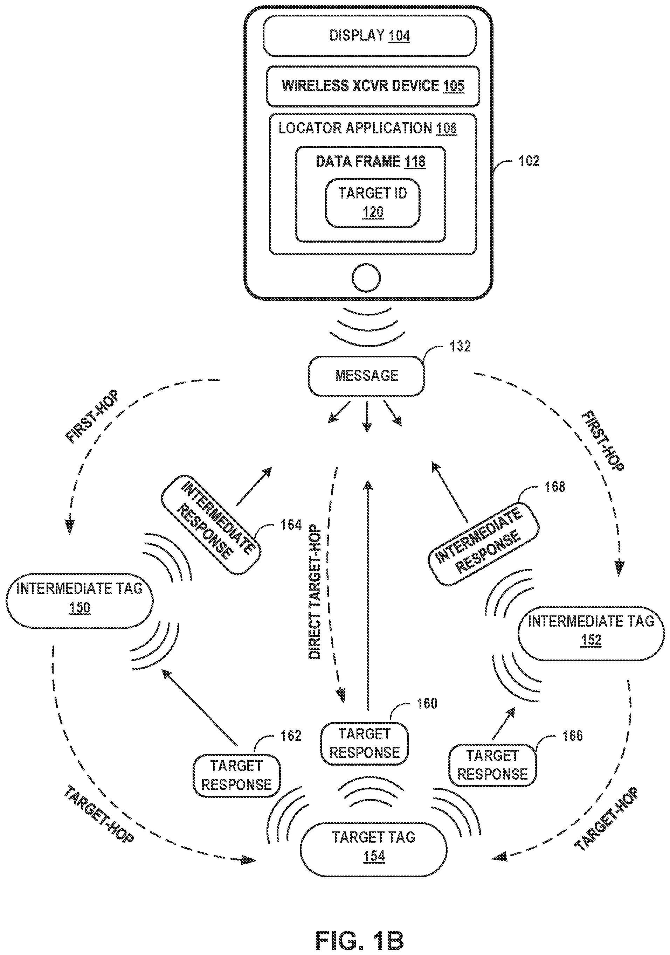

FIG. 1A is a conceptual diagram illustrating an example of a computing device that is configured to locate a target tag by communicating with neighboring intermediate tags proximate to the target tag. In the example of FIG. 1, computing device 102 may include, but is not limited to, portable or mobile devices such as mobile phones (including smart phones), laptop computers, tablet computers, wearable computing devices such as smart watches or computerized eyewear, etc.

As shown in FIG. 1A, computing device 102 includes a display 104, wireless transceiver 105 and a locator application 106. The wireless transceiver 105 is configured to communicate with wireless identification tags, such as intermediate tags 108-112 and target tag 114. The intermediate tags 108-112 and the target tag 114 may be configured to communicate with each other using a common wireless communication protocol, such as ultra-wide band or other wireless communication protocol configurable to determine at least a distance between the interrogating node (e.g., a computing device or a tag) and a tag. For example, the distance between may be determined by a RTT algorithm, signal strength, etc. In examples, the interrogator (e.g., computing device 102 and some or all the intermediate tags) may include multiple antennas (not shown) that may determine the angle of arrival (AoA) of a response from an interrogated tag, and thus the direction of the response relative to the interrogator. Depending on the configuration of the tags and the application, the intermediate tags may be one or a combination of active, semi-active or passive tags.

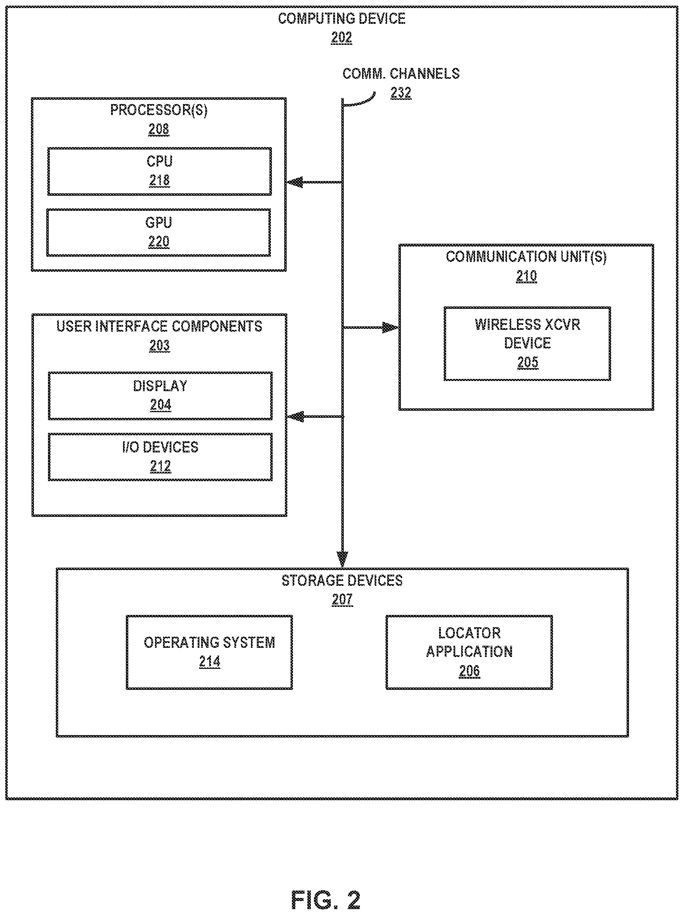

Computing device 102 may execute locator application 106 with one or more processors (e.g., processors 208 of FIG. 2) and may access and utilize various components of computing device 102, such as display 104, wireless transceiver 105, and other components not shown in FIG. 1 and discussed in detail with respect to FIG. 2. In one example, locator application 106 may be configured to locate the position of target tag 114 associated with an object (e.g., a vehicle, backpack, another computing device, etc.) by communicating with one or more intermediate tags in a surrounding area. Using intermediate tags (e.g., intermediate tags 108-112) to establish a path to the target tag (e.g., target tag 114) in the various techniques and examples discussed herein reduces issues with respect to obtaining increased range fidelity for long range sensing when the target tag gets further away from the computing device attempting to track the target tag. As the ranging and localization error grows and the estimates can be unreliable. These issues increase the difficulty in implementing far-field applications such as accurately locating, controlling or initiating an action from an object, such as locating a vehicle in a parking area, parking area management, car self-driving to a user, pre-unlock, etc.

As shown in the example of FIG. 1A, intermediate tag 110 and target tag 114 may be too far from computing device 102 to communicate with wireless transceiver 105. Examples may include a multitude of paths through various intermediate tags to the target tag (e.g., target tag 114) to increase the range fidelity for long range sensing. Each path may include a multitude of hops. For simplicity, the largest number of hops in one indirect path illustrated herein is three, including a target hop, however, the number of paths and corresponding hops to the target are not limited to such. In the example for FIG. 1A, computing device 102 uses two intermediate tag paths of two hops and three hops, respectively, to the target to determine an improved estimate for the direction and distance from computing device 102 to target tag 114.

For example, wireless transceiver 105 may broadcast message 122 that includes data frame 118 and target identifier 120 over a wireless communication channel (e.g., UWB) to intermediate tags 108 and 112 to locate target tag 114 relative to computing device 102. Data frame 118, including target identifier 120, may be encrypted such that only target tag 114, based on the target identifier, may decode and respond to message 122.

In a first intermediate tag path, intermediate tag 108 receives message 122 in a first-hop, and, because computing device 102 cannot reach target tag 114, computing device 102 communicates at least a portion of message 122, including target identifier 120, to another intermediate tag 110 in a second-hop. Intermediate tag 110 reaches target tag 114 in a target-hop based on its communication of at least a portion of message 122, that includes target identifier 120, to target tag 114. Target identifier 120 signals target tag 114 that target tag 114 is the intended recipient of message 122. Intermediate tag 110 receives target response 140, including range data, for at least determining the target-hop distance between intermediate tag 110 and target tag 114. Intermediate tag 110 sends intermediate response 142 that includes range data associated with the target-hop distance and direction data associated with the second-hop distance. Intermediate tag 108 communicates intermediate response 144 to locator application 106 through the wireless transceiver 105. Intermediate response 144 may include the range data associated with the target-hop distance, the second-hop distance and direction data associated with the first-hop distance from computing device 102 to intermediate tag 108. In another example, intermediate response 144 including the range data of the first-hop distance is communicated to computing device 102 prior to the transmission to the intermediate tag 110, meaning another intermediate response 144 may be communicated to computing device 102 after receiving intermediate response 142 and target response 140 that include the range data associated with the target-hop distance and the second-hop distance, respectively.

The example of FIG. 1A includes a second intermediate tag path through intermediate tag 112 to target tag 114. Intermediate tag 112 is a first hop node and receives message 122 from computing device 102. Intermediate tag 112 reaches target tag 114 in a target-hop based on its communication of at least a portion of message 122, including target identifier 120, to target tag 114. Intermediate tag 112 receives target response 146, including range data, for determining at least the target-hop distance between the intermediate tag 112 and the target tag 114. Intermediate tag 112 communicates intermediate response 148, including the range data associated with the target-hop distance and the first-hop distance, to computing device 102, which uses locator application 106 to process the data to figure out the direction and distance to the target tag 114.

Locator application 106 may determine each first-hop response direction between computing device 102 and intermediate tags 108 and 112 based on intermediate responses 144 and 148, respectively. In one example, computing device 102 includes multiple antennas (not shown) that may determine the angle of arrival (AoA) of the wireless signals associated with intermediate response 144 and intermediate response 148. Based on each the angle of arrival, location application 106 may determine the direction of each response relative to computing device 102. In other examples, some or all the intermediate tags may include multiple antennas and based on the AoA provide direction data of the source of each intermediate response relative to other intermediate tags and/or the target tag. The direction data, among other data (e.g., range data from other intermediate tags or the target tag), may be used by the location application 106 to determine the direction and distance to the target tag 114. Returning to computing device 102, in one example, based on intermediate responses 144 and 148, locator application 106 may determine the distance and direction of target tag 114 relative to computing device 102. In one example, the target tag distance and the target tag direction are based on each intermediate path's data that includes each intermediate tag's 108 and 112 first-hop direction (i.e., direction from the computing device 102) and their respective intermediate responses 144 and 148. The intermediate responses 144 and 148 may further include the second hop distance from intermediate tag 108 to 110, the target-hop distance from intermediate tag 110 to target tag 114, and the target-hop from intermediate tag 112 and to target tag 114, respectively. In one example, the target tag distance and each hop distance are determined based on a round-trip-time (RTT) algorithm associated with each wireless signal. For example, a RTT between computing device 102 to target tag 114 (if in range), and a RTT for each second-hop and target-hop, such as between intermediate tag 108 and intermediate tag 110, and between intermediate tag 110 and target tag 114. In some examples, the intermediate responses from each intermediate tag may include additional timing data for the RTT algorithm, such as a turnaround time reflecting the intermediate tag processing delay, to increase the accuracy of the RTT determination.

To further refine the results, locator application 106 may use an algorithm, such as a loss-function algorithm, to apply a separate weight to each of the two intermediate paths. In one example, the weight is a scalar multiplied to each term of the loss-function algorithm, where each term mathematically represents the path to the target tag. Each term of the loss-function algorithm may be comprised positional values, such as cartesian coordinates based on distance measurements (i.e., second hop and target hop distances) and cartesian-polar mapping (i.e., first hop distance and AoA data). In some examples, a higher weight may be given to the most accurate path and a lesser weight to other paths. In the example of FIG. 1A, there is not a direct path to target tag 114 from computing device 102 and thus, the weight given to the term representing the direct path may be "0" and the weight given to the indirect path "1". In other examples, different weights may be distributed among a multitude of paths depending on their path parameters, as discussed below.

In one example, the weights for each path term may be based on any one or combination of a number of path parameters, such as the number and type (e.g., direct and indirect) of available paths to the target tag, first hop direction, the number intermediate tags to the target in path (i.e., the number of hops), the distance to the target tag on a direct hop, or relative position of the intermediate tags to one or both target tag and the computing device. In one example, the weights for a variety of path combinations and path parameters may be determined based on experimental results or simulations and stored either locally on computing device 102 or remotely (i.e., in the cloud - not shown) and, in one example, used by locator application 106 to determine the target tag distance and direction as discussed herein.

In one example, locator application 106 may output results to display 104. For example, locator application 106 may include a mapping or plotting function to provide a user of computing device 102 navigation data, such as a map, grid, or coordinates to an object (e.g., a vehicle, a backpack, or another computing device) based on the determined target distance and target direction, as set forth in the techniques and examples discussed herein.

FIG. 1B is a conceptual diagram illustrating another example of a computing device that is configured to locate a target tag by communicating with neighboring intermediate tags proximate to the target tag and the target tag. In the example of FIG. 1B, like FIG. 1A, computing device 102 may include display 104, wireless transceiver 105 and locator application 106. The components and techniques discussed herein with respect to FIG. 1B, such as the hardware, software, protocols (e.g., UWB) wireless data communicated by computing device 102, and techniques (e.g., use of RTT, etc.) is similar or the same as that discussed in FIG. 1A and will not be repeated here for brevity. The example of FIG. 1B, unlike the example of FIG. 1A, does not include a second-hop from one intermediate tag to another intermediate tag (e.g., see the second hop of FIG. 1A) and further includes a first-hop directly to target tag 154. Although a direct connection is made to target tag 154 from computing device 102, the connection may have accuracy issues with respect to range fidelity due to noise, etc., especially over long ranges, or if actively moving the computing device (e.g., walking with a mobile device) as the target tag (e.g., target tag 154) gets further away from the device as it attempts to track the target tag. Thus, using intermediate tags in the various techniques and examples discussed herein reduces issues with respect to obtaining increased range fidelity for medium to long range sensing while tracking the target tag.

Examples may include a path to the target tag and a multitude of paths through various intermediate tags to the target tag (e.g., target tag 154) that may be used to increase the range fidelity for long range sensing. In the example for FIG. 1B, computing device 102 uses one direct path to target tag 154 and two intermediate tag paths to target tag 154 to determine an improved estimate for the direction and distance from computing device 102 to target tag 154.

For example, the wireless transceiver 105 may broadcast a data frame 118, including target identifier 120, in message 132 over a wireless communication channel (e.g., UWB) to intermediate tags 150 and 152, and target tag 154 to locate target tag 154 relative to computing device 102. The data frame 118, including the target identifier 120, may be encrypted such that only target tag 154, based on the target identifier, may decode and respond to the message 132. In other words, the target tag identifier 120 is configured to signal the target tag 114 that it is the intended recipient of the message 132.

In one example, target tag 154 receives, in a first-hop, message 132. In response, target tag 154 communicates target response 160 to locator application 106 through the wireless transceiver 105. Target response 160 may include range data associated with a direct target-hop distance from computing device 102 to target tag 154. Because the direct target-hop is a first hop directly from computing device 102, the target tag direction may also be derived based on target response 160, as described above with respect to FIG. 1A (e.g., using RTT algorithm)

In a first intermediate tag path, the intermediate tag 150 receives message 132 in a first-hop and communicates at least a portion of message 132, including target identifier 120, to target tag 154 in a target-hop. The intermediate tag 150 receives target response 162, including range data for at least determining the target-hop distance between the intermediate tag 150 and target tag 154. The intermediate tag 150 communicates an intermediate response 164 to locator application 106 through the wireless transceiver 105. The intermediate response 164 may include the range data associated with the target-hop distance and the first-hop distance from computing device 102 to intermediate tag 150. In another example, intermediate response 164, including the range data of the first-hop distance, is communicated to computing device 102 prior to the transmission of the target-hop, meaning another intermediate response 164 may be communicated to computing device 102 after the acquisition of target response 162 that includes the range data associated with the target-hop distance.

The second intermediate tag path in the example of FIG. 1B is through intermediate tag 152 to target tag 154. Intermediate tag 152 receives message 132 in a first-hop. Intermediate tag 112 reaches target tag 154 in a target-hop based on its communication of at least a portion of message 132, including target identifier 120, to target tag 154. The intermediate tag 152 receives a target response 166 including range data for determining at least the target-hop distance between the intermediate tag 152 and target tag 154. The intermediate tag 152 communicates intermediate response 168, including the range data associated with the target-hop distance and the first-hop distance, to locator application 106 through wireless transceiver 105.

Locator application 106 may determine each first-hop response direction between the computing device 102 and intermediate tag 150, intermediate tag 152 and target tag 154 based on intermediate response 164, intermediate response 168, and target response 160 direct from target tag 154. As discussed above with respect to FIG. 1A, computing device 102, and in some examples one or more of the intermediate tags, may determine the direction (e.g., via AoA) of each first-hop response and the direct target-hop response relative to computing device 102.

Locator application 106 of computing device 102 may determine a revised target tag distance and target tag direction from computing device 102 to target tag 154 based on the received intermediate responses, target response 160, the determined first-hop response directions and the direct target-hop direction. Further, as discussed above with respect to FIG. 1A, determining the target tag distance and target tag direction may include locator application 106 applying a loss-function algorithm that applies weights to each path term to improve accuracy.

In one example, locator application 106 may output results to display 104. For example, locator application 106 may include a mapping or plotting function to provide a user of computing device 102 navigation data, such as a map, grid, or coordinates to an object (e.g., a vehicle, a backpack, or another computing device) using the determined target distance and target direction based on target tag 154 and intermediate tags 150 and 152, as set forth in the techniques and examples discussed herein.

FIG. 2 is a block diagram illustrating an example computing device, in accordance with one or more aspects of the present disclosure. FIG. 2 illustrates only one example of computing device 102, as illustrated in FIGS. 1A and 1B. Many other examples of computing device 102 may be used in other instances and may include a subset of the components included in example computing device 202 or may include additional components not shown in FIG. 2.

As shown in the example of FIG. 2, computing device 202 includes one or more processors 208, one or more input/output components, such as user interface components (UIC) 203, one or more communication units 210, and one or more storage devices 207. Storage devices 207 of computing device 202 may include locator application 206 application and operating system 214. UIC 203 may include display 204 and I/O (input/output) devices 212, and the communication unit(s) 210 may include wireless transceiver 205. The one or more communication units 210 of computing device 202, for example, may communicate with external devices by transmitting and/or receiving data at computing device 202, such as to and from locator application 206, and intermediate tags and target tags (e.g., intermediate tag 150 and target tag 154). computing device 202 may use communication units 210 to transmit and/or receive radio signals including data on a radio network such as a cellular network or transmit and receive wireless signals including data frames and packets. Example communication units 210 include a network interface card (e.g., such as an Ethernet card), an optical transceiver, a radio frequency transceiver, a GPS receiver, or any other type of device that can send and/or receive information. Other examples of communication units 210 may devices configured to transmit and receive Ultrawideband^{®}, Bluetooth^{®}, GPS, 3G, 4G, and Wi-Fi^{®}, etc. that may be found in computing devices, such as mobile devices and the like.

As shown in the example of FIG. 2, communication channels 232 may interconnect each of the components as shown for inter-component communications (physically, communicatively, and/or operatively). In some examples, communication channels 232 may include a system bus, a network connection (e.g., to a wireless connection as described above), one or more inter-process communication data structures, or any other components for communicating data between hardware and/or software locally or remotely.

One or more storage devices 207 within computing device 202 may store information, such as data associated with intermediate responses and target responses as discussed herein, for processing during operation of computing device 202. In some examples, one or more storage devices of storage devices 207 may be a volatile or temporary memory. Examples of volatile memories include random access memories (RAM), dynamic random access memories (DRAM), static random access memories (SRAM), and other forms of volatile memories known in the art. Storage devices 207, in some examples, may also include one or more computer-readable storage media. Storage devices 207 may be configured to store larger amounts of information for longer terms in non-volatile memory than volatile memory. Examples of non-volatile memories include magnetic hard discs, optical discs, floppy discs, flash memories, or forms of electrically programmable memories (EPROM) or electrically erasable and programmable (EEPROM) memories. Storage devices 207 may store program instructions and/or data associated with the operating system 214 and the locator application 206.

One or more I/O devices 212 and display 204 of UIC 203 of computing device 202 may receive inputs and generate outputs. Examples of inputs are tactile, audio, kinetic, and optical input, to name a few examples. Input devices of I/O devices 212, in one example, may include a touchscreen, a touch pad, a mouse, a keyboard, a voice responsive system, a video camera, buttons, a control pad, a microphone or any other type of device for detecting input from a human or machine. Output devices of I/O devices 212, in addition to display 204, may include, a sound card, a video graphics adapter card, a speaker, or any other type of device for generating output to a human or machine.

Locator application 206 may perform operations described herein using software, hardware, firmware, or a mixture of both hardware, software, and firmware residing in and executing on computing device 202 or at one or more other remote computing devices (e.g., cloud-based application - not shown). Computing device 202 may execute locator application 206 with one or more processors 208 or may execute any or part of locator application 206 as or within a virtual machine executing on underlying hardware. Locator application 206 may be implemented in various ways, for example, locator application 206 may be implemented as a downloadable or pre-installed application or "app." In another example, locator application 206 may be implemented as part of operating system 214 of computing device 202. Other examples of computing device 202 that implement techniques of this disclosure may include additional components not shown in FIGS. 1A and 1B.

One or more processors 208 may implement functionality and/or execute instructions within computing device 202. For example, one or more processors 208 may receive and execute instructions that provide the functionality locator application 206 to perform one or more operations and various functions described herein to broadcast encrypted messages over a wireless signal (e.g., UWB) to locate a target tag using responses from neighboring intermediate tags over indirect paths to determine a target tag distance and range.

In the example of FIG. 2, one or more processors 208 may implement functionality and/or execute instructions within computing device 202. For example, one or more processors 208 may receive and execute instructions that provide the functionality of UIC 203, communication units 210, and one or more storage devices 207 that include locator application 206 and operating system 214 to perform one or more operations as described herein. The one or more processors 208 include central processing unit (CPU) 218 and graphics processing unit (GPU) 220. GPU 220 may be a processing unit configured to configured to perform graphics related functions, such as to generate and output graphics data for presentation on a display, as well as to perform non-graphics related functions that exploit the massive processing parallelism provided by GPU 220. Examples of CPU 218 and GPU 220 include, but are not limited to, a digital signal processor (DSP), a general-purpose microprocessor, a tensor processing unit (TPU); a neural processing unit (NPU); a neural processing engine; a core of a CPU, VPU, GPU, TPU, NPU or other processing device, an application specific integrated circuit (ASIC), a field programmable logic array (FPGA), or other equivalent integrated or discrete logic circuitry, or other equivalent integrated or discrete logic circuitry.

UIC 203 of computing device 202 may function as an input device for computing device 202 and as an output device to, for example, receive input and displaying output associated with the execution of locator application 206. For instance, display 204 of UIC 203 may function as an input device using a resistive touchscreen, a surface acoustic wave touchscreen, a capacitive touchscreen, a projective capacitance touchscreen, a pressure sensitive screen, an acoustic pulse recognition touchscreen, or another presence-sensitive screen technology. Further, display 204 of UIC 203 may function as an output device using any one or more of a liquid crystal display (LCD), dot matrix display, light emitting diode (LED) display, microLED, organic light-emitting diode (OLED) display, e-ink, or similar monochrome or color display capable of outputting visible information to the user of computing device 202.

In some examples, display 204 may be a presence-sensitive screen that may receive tactile user input from a user of computing device 202. UIC 203 may receive the tactile user input by detecting one or more taps and/or gestures from a user of computing device 202 (e.g., the user touching or pointing to one or more locations of UIC 203 with a finger or a stylus pen). The presence-sensitive screen of UIC 203 may present output to a user. UIC 203 may present the output as a user interface, which may be related to functionality provided by computing device 202. For example, UIC 203 may present various functions and applications executing on computing device 202 such as an electronic message application, a messaging application, a map application, etc.

In one example, locator application 206 may interpret input data detected at display 204 of UIC 203 (e.g., as a user provides one or more gestures at a location on display 204) as a request to locator application 206 to locate a target tag associated with an object. In response, for example, wireless transceiver 205 may broadcast a message that includes a data frame and a target identifier over a wireless communication channel (e.g., UWB) to intermediate tags and potentially the target tag. Locator application 206 may then receive over wireless transceiver 205 intermediate tag and/or target tag data in the form of intermediate responses and a target response (if in range), as detailed above with respect to FIGS. 1A and 1B.

Locator application 206 may determine each first-hop response direction between the computing device and each intermediate tag and the target tag, if in range, based on the received intermediate responses and the target response. As discussed above with respect to FIGS. 1A and 1B, computing device 202, and in some examples one or more of the intermediate tags, may determine the direction (e.g., via AoA) of each first-hop response and the direct target-hop response relative to computing device 202.

Locator application 206 of computing device 202 may determine a target tag distance and target tag direction from computing device 202 to the target tag based on the received intermediate responses, the target response, the determined first-hop response directions and the direct target-hop direction (if the target tag is in range of the wireless transceiver 205).

In one example, locator application 206 may output results to display 204. For example, locator application 206 may include a mapping or plotting function to provide a user of computing device 202 navigation data, such as a map, grid, or coordinates to an object (e.g., a vehicle, a backpack, or another computing device) using the determined target distance and target direction based on the target tag and intermediate tags, as set forth in the techniques and examples discussed herein.

In situations in which the systems discussed herein may collect personal information (i.e., data) about the user to the extent it includes and may make use of the user's personal information, such as the use and location data of intermediate tags, the user may be provided with an opportunity to control whether, and to what extent, programs or features collect the user's information (e.g., information about the user's current location). In addition, certain data may be treated in one or more ways before it is stored or used, so that personally identifiable information is removed. For example, the user's identity may be treated so that no personally identifiable information can be determined for the user, or the user's geographic location may be generalized where location information is obtained (such as to a city, ZIP code, or state level), so that a particular location of the user cannot be determined. Thus, the user may have control over how information is collected about the user and used by the computing device 102 as described here.

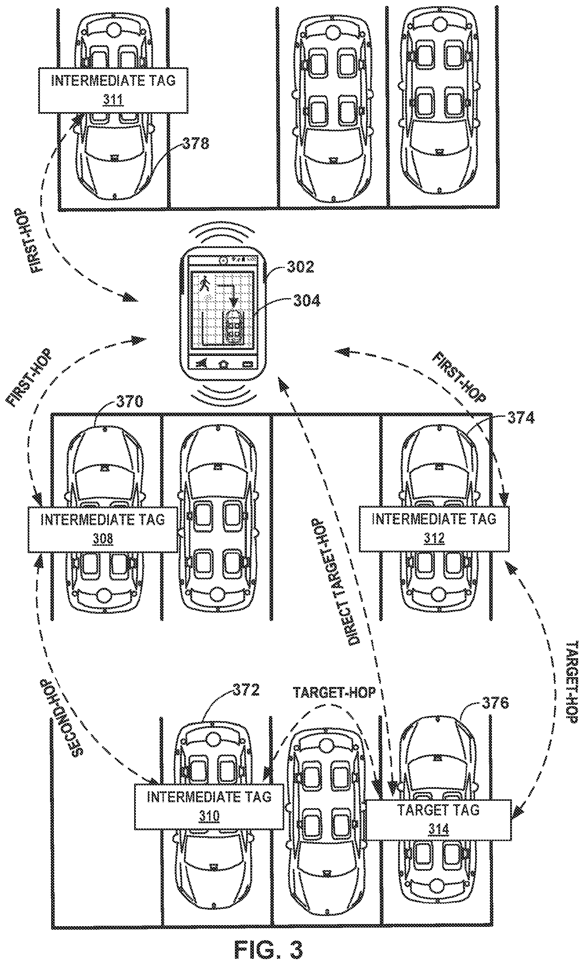

FIG. 3 is a diagram illustrating a parking area that includes computing device 302 in the form of a handheld device, and a plurality of intermediate wireless tags and a wireless target tag, in accordance with one or more aspects of the present disclosure. Computing device 302, in this example, includes all the components of computing device 102 and 202 as described with respect to FIGS. 1B, 1B, and FIG. 2 above, including display 304.

As shown in the example of FIG. 3, the diagram includes user car 376 including target tag 314, car 374 including intermediate tag 312, car 370 including intermediate tag 308, car 378 including intermediate tag 311, and car 372 including intermediate tag 310. In one example, computing device 302 may receive input, as described above, that begins execution of a locator application (e.g., locator application 106) to locate target tag 314 associated with user car 376. In one example, device 302 performs the operations and functions to locate target tag 314 by broadcasting a message that includes a data frame and a target identifier over a wireless communication channel (e.g., UWB) to the intermediate tags and potentially the target tag, if in range. Locator application 106 (not shown) may then receive over wireless transceiver 205 intermediate tag and/or target tag data in the form of intermediate responses and a target response (if in range), as detailed above with respect to FIGS. 1A and 1B, and shown here as first-hops, a second-hop, target hops, and a direct target-hop (if in range).

As discussed above, locator application 106 of computing device 302, may determine each first-hop response direction between computing device 302 and each intermediate tag 312-320 and target tag 314, if in range. Each first hop direction is based on the received intermediate responses from intermediate tags 308-212 and the target response from target tag 314, respectively.

Computing device 302 may determine intermediate tag 311 will not be used in determining the location of target tag 314 based at least on one of the direction or distance of intermediate tag 311. In the example as illustrated in FIG. 3, computing device 302 determines intermediate tag 311 is in the opposite direction with respect to target tag 314 and thus excludes intermediate tag 311 in determining the distance and direction to the target tag 314. In another example, computing device 302 may determine the distance from of an intermediate tag (e.g., intermediate tag 311) to at least one of the target tag 314 or the computing device 302 exceeds a threshold distance. In response, computing device 302 may exclude the intermediate tag in the determination of the distance and direction to the target tag 114.

Computing device 302 may determine a target tag distance and target tag direction from computing device 302 to target tag 314 based on the received intermediate responses from intermediate tags 316 and 318 (via first hops), intermediate tag 310 (via second hop through intermediate tag 308), the target response from target tag 314 (if in range), the determined first-hop response directions and the direct target-hop direction (if in range). As discussed above with respect to FIG. 1A, computing device 302 may apply a loss-function algorithm that applies weights to each path term to improve accuracy as part of determining the target tag distance and target tag direction.

In one example, a locator application executing at computing device 302 may cause a display of computing device 302 to display the results of the locating process. For example, the computing device 302 may display a graphical user interface on display 304 that includes a mapping or plotting function to provide a user of computing device 302 navigation data, such as a map, grid, or coordinates to user car 376.

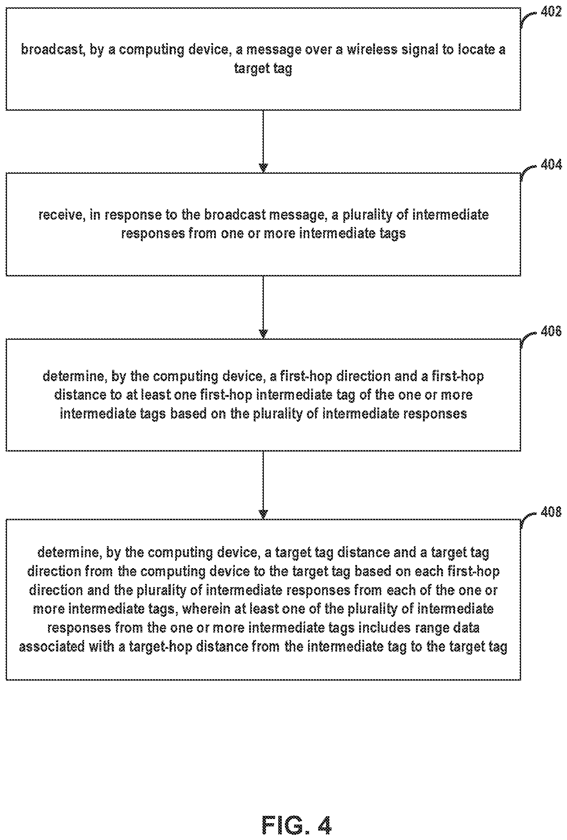

FIG. 4 is a flowchart illustrating an example mode of operation for a computing device to locate a target tag by communicating with neighboring intermediate tags proximate to the target tag. FIG. 4 is described below in the context of computing device 202 of FIGS. 1A and 1B, FIG. 2 and computing device 302 of FIG. 3. As shown in FIG. 4, computing device 202 may broadcast a message (e.g., message 122) over a wireless signal to locate a target tag (e.g., target tag 114) (402). Computing device 202 may receive, in response to the broadcast message, a plurality of intermediate responses (e.g., intermediate responses 144 and 148) from one or more intermediate tags (404). The computing device may determine a first-hop direction and a first-hop distance to at least one first-hop intermediate tag (e.g., intermediate tag 108 and 112) of the one or more intermediate tags based on the plurality of intermediate responses (406). The computing device may determine a target tag distance and a target tag direction from the computing device to the target tag based on each first-hop direction and the plurality of intermediate responses from each of the one or more intermediate tags, wherein at least one of the plurality of intermediate responses from the one or more intermediate tags includes range data associated with a target-hop distance from the intermediate tag to the target tag (408).

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage mediums and media and data storage media do not include connections, carrier waves, signals, or other transient media, but are instead directed to nontransient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable medium.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

Various examples of the invention have been described. The scope of protection is defined by the appended claims.

## Claims

1. A method comprising:
broadcasting (402), by a computing device (102), a message (122) over a wireless signal to locate a target tag (114);
receiving (404), in response to the broadcast message, a plurality of intermediate responses (142, 144, 148) from one or more intermediate tags (108, 110, 112), the one or more intermediate tags comprising tags in one or more transmission paths between the computing device and the target tag;
determining (406), by the computing device, a first-hop direction and a first-hop distance from the computing device to at least one first-hop intermediate tag of the one or more intermediate tags based on the plurality of intermediate responses, each first hop intermediate tag comprising a first tag in a respective transmission path between the computing device and the target tag; and
determining (408), by the computing device, a target tag distance and a target tag direction from the computing device to the target tag based on each first-hop direction and first hop distance and the plurality of intermediate responses from each of the one or more intermediate tags, wherein at least one of the plurality of intermediate responses from the one or more intermediate tags includes range data associated with a target-hop distance from the intermediate tag to the target tag and direction data associated with a target-hop direction from the intermediate tag to the target tag.

2. The method of claim 1, further comprising:
receiving, in response to the message (122), a target response (140, 146) including range data from the target tag (114) to an intermediate tag (110, 112); and
determining, by the computing device (102), the target tag distance and the target tag direction from the computing device to the target tag based on the target response and the plurality of intermediate responses (142, 144, 148) from each of the one or more intermediate tags.

3. The method of any one of claims 1-2, further comprising:
determining, by the computing device (102), the target tag (114) distance and each first-hop distance from the computing device based on corresponding round-trip-times of the wireless signal to and from the computing device to the target tag and each first-hop intermediate tag.

4. The method of any one of claims 1-3, further comprising:
determining, by the computing device (102) with the range data, the target-hop distance from each intermediate tag (108, 110, 112) to the target tag (114) based on a round-trip-time of a second wireless signal from each intermediate tag to the target tag.

5. The method of any one of claims 1-4, wherein the wireless signal is a first wireless signal, the method further comprising:
encrypting the message (122), the encrypted message including a target tag identifier used by each intermediate tag (108, 110, 112) to transmit a second message over a second wireless signal and configured to communicate with only the target tag.

6. The method of any one of claims 1-5, further comprising:
selecting two or more intermediate tags (108, 110, 112) from the plurality of intermediate tags for determining the target tag (114) distance based on at least on one of a threshold distance from the target tag to each of the plurality of intermediate tags, or a direction from the computing device to each of the plurality of intermediate tags.

7. The method of any one of claims 1-6, wherein the intermediate response for one or more of the intermediate tags (108, 110, 112) further includes range data associated with a third-hop distance from each first-hop intermediate tag to a second-hop intermediate tag, and the target-hop distance from the second intermediate tag to the target tag.

8. The method of any one of claims 1-7, wherein determining the target tag (114) distance and the target tag direction further includes:
determining the target tag distance and the target tag direction from the computing device (102) to the target tag based on the plurality of intermediate responses (142, 144, 148) from each of the one or more intermediate tags, wherein the intermediate responses include a direction from one or more intermediate tags to another intermediate tag and the target tag.

9. The method of any one of claims 1-8, wherein the wireless signal and the second wireless signal are ultra-wideband signals.

10. The method of any one of claims 1-9, wherein one or more intermediate paths include one or more intermediate tags (108, 110, 112) between the computing device (102) and the target tag (114) and a direct path from the computing device to the target tag, wherein determining the target tag distance and the target tag direction from the computing device to the target tag further comprises:
applying, by the computing device, a loss-function algorithm that applies a weight to each term of an equation loss-function algorithm to determine the target tag distance and the target tag direction, wherein each term of the equation represents at least one of each intermediate path of the one or more intermediate paths to the target tag or the direct path to the target tag.

11. A computing device (102) comprising:
a wireless transceiver (105) to broadcast a message over a wireless signal to locate a target tag (114);
memory; and
one or more processors operably coupled to the memory and configured to perform the method of any preceding claim.

12. A non-transitory computer-readable storage medium storing instructions that, when executed, cause one or more processors of a computing device to performing any of the methods of claim 1-10.

## Patentansprüche

1. Verfahren, umfassend:
Aussenden (402) einer Nachricht (122) über ein drahtloses Signal, um ein Ziel-Tag (114) zu lokalisieren, durch eine Rechenvorrichtung (102);
Empfangen (404) einer Vielzahl von Zwischenreaktionen (142, 144, 148) von einem oder mehreren Zwischen-Tags (108, 110, 112) als Reaktion auf die ausgesendete Nachricht, wobei das eine oder die mehreren Zwischen-Tags Tags in einem oder mehreren Übertragungspfaden zwischen der Rechenvorrichtung und dem Ziel-Tag umfassen;
Bestimmen (406) einer First-Hop-Richtung und einer First-Hop-Entfernung von der Rechenvorrichtung zu mindestens einem First-Hop-Zwischen-Tag des einen oder der mehreren Zwischen-Tags basierend auf der Vielzahl von Zwischenreaktionen durch die Rechenvorrichtung, wobei jedes First-Hop-Zwischen-Tag ein erstes Tag in einem jeweiligen Übertragungspfad zwischen der Rechenvorrichtung und dem Ziel-Tag umfasst; und
Bestimmen (408) einer Ziel-Tag-Entfernung und einer Ziel-Tag-Richtung von der Rechenvorrichtung zu dem Ziel-Tag basierend auf jeder First-Hop-Richtung und First-Hop-Entfernung und der Vielzahl von Zwischenreaktionen von jedem der einen oder mehreren Zwischen-Tags durch die Rechenvorrichtung, wobei mindestens eine der Vielzahl von Reaktionen von dem einen oder den mehreren Zwischen-Tags Bereichsdaten, die einer Ziel-Sprung-Entfernung von dem Zwischen-Tag zu dem Ziel-Tag zugeordnet sind, und Richtungsdaten, die einer Ziel-Sprung-Richtung von dem Zwischen-Tag zu dem Ziel-Tag zugeordnet sind, beinhaltet.

2. Verfahren nach Anspruch 1, ferner umfassend:
Empfangen einer Zielreaktion (140, 146), die Bereichsdaten von dem Ziel-Tag (114) zu einem Zwischen-Tag (110, 112) beinhaltet, als Reaktion auf die Nachricht (122); und
Bestimmen der Ziel-Tag-Entfernung und der Ziel-Tag-Richtung von der Rechenvorrichtung zu dem Ziel-Tag basierend auf der ZielReaktion und der Vielzahl von Zwischenreaktionen (142, 144, 148) von jedem der einen oder mehreren Zwischen-Tags durch die Rechenvorrichtung (102).

3. Verfahren nach einem der Ansprüche 1-2, ferner umfassend:
Bestimmen der Ziel-Tag-Entfernung (114) und jeder First-Hop-Entfernung von der Rechenvorrichtung basierend auf entsprechenden Umlaufzeiten des drahtlosen Signals zu und von der Rechenvorrichtung zu dem Ziel-Tag und jedem First-Hop-Zwischen-Tag durch die Rechenvorrichtung (102).

4. Verfahren nach einem der Ansprüche 1-3, ferner umfassend:
Bestimmen der Ziel-Hop-Entfernung von jedem Zwischen-Tag (108, 110, 112) zu dem Ziel-Tag (114) basierend auf einer Umlaufzeit eines zweiten drahtlosen Signals von jedem Zwischen-Tag zu dem Ziel-Tag durch die Rechenvorrichtung (102) mit den Bereichsdaten.

5. Verfahren nach einem der Ansprüche 1-4, wobei das drahtlose Signal ein erstes drahtloses Signal ist, wobei das Verfahren ferner Folgendes umfasst:
Verschlüsseln der Nachricht (122), wobei die verschlüsselte Nachricht einen Ziel-Tag-Bezeichner beinhaltet, der von jedem Zwischen-Tag (108, 110, 112) verwendet wird, um eine zweite Nachricht über ein zweites drahtloses Signal zu übertragen, und dazu konfiguriert ist, nur mit dem Ziel-Tag zu kommunizieren.

6. Verfahren nach einem der Ansprüche 1-5, ferner umfassend:
Auswählen von zwei oder mehr Zwischen-Tags (108, 110, 112) aus der Vielzahl von Zwischen-Tags zum Bestimmen der Ziel-Tag-Entfernung (114) basierend auf mindestens einer Schwellenwertentfernung von dem Ziel-Tag zu jedem der Vielzahl von Zwischen-Tags oder einer Richtung von der Rechenvorrichtung zu jedem der Vielzahl von Zwischen-Tags.

7. Verfahren nach einem der Ansprüche 1-6, wobei die Zwischenreaktion für einen oder mehrere der Zwischen-Tags (108, 110, 112) ferner Bereichsdaten beinhaltet, die einer Third-Hop-Entfernung von jedem First-Hop-Zwischen-Tag zu einem Second-Hop-Zwischen-Tag und der Target-Hop-Entfernung von dem zweiten Zwischen-Tag zu dem Ziel-Tag zugeordnet sind.

8. Verfahren nach einem der Ansprüche 1-7, wobei das Bestimmen der Entfernung des Ziel-Tags (114) und der Ziel-Tag-Richtung ferner Folgendes beinhaltet:
Bestimmen der Ziel-Tag-Entfernung und der Ziel-Tag-Richtung von der Rechenvorrichtung (102) zu dem Ziel-Tag basierend auf der Vielzahl von Zwischenreaktionen (142, 144, 148) von jedem der einen oder mehreren Zwischen-Tags, wobei die Zwischenreaktionen eine Richtung von einem oder mehreren Zwischen-Tags zu einem anderen Zwischen-Tag und dem Ziel-Tag beinhalten.

9. Verfahren nach einem der Ansprüche 1-8, wobei das drahtlose Signal und das zweite drahtlose Signal Ultrabreitbandsignale sind.

10. Verfahren nach einem der Ansprüche 1-9, wobei ein oder mehrere Zwischenpfade ein oder mehrere Zwischen-Tags (108, 110, 112) zwischen der Rechenvorrichtung (102) und dem Ziel-Tag (114) und einen direkten Pfad von der Rechenvorrichtung zu dem Ziel-Tag beinhalten, wobei das Bestimmen der Ziel-Tag-Entfernung und der Ziel-Tag-Richtung von der Rechenvorrichtung zu dem Ziel-Tag ferner Folgendes umfasst:
Anwenden eines Verlustfunktionsalgorithmus, der eine Gewichtung auf jeden Ausdruck einer Verlustfunktionsalgorithmus-Gleichung zum Bestimmen der Ziel-Tag-Entfernung und der Ziel-Tag-Richtung anwendet, durch die Rechenvorrichtung, wobei jeder Ausdruck der Gleichung mindestens einen von jedem Zwischenpfad des einen oder der mehreren Zwischenpfade zu dem Ziel-Tag oder den direkten Pfad zu dem Ziel-Tag darstellt.

11. Rechenvorrichtung (102), umfassend:
einen drahtlosen Sender-Empfänger (105) zum Aussenden einer Nachricht über ein drahtloses Signal, um ein Ziel-Tag (114) zu lokalisieren;
einen Speicher; und
einen oder mehrere Prozessoren, die mit dem Speicher betriebswirksam gekoppelt sind und dazu konfiguriert sind, das Verfahren nach einem vorhergehenden Anspruch durchzuführen.

12. Nichttransitorisches computerlesbares Speichermedium, das Anweisungen speichert, die bei ihrer Ausführung einen oder mehrere Prozessoren einer Rechenvorrichtung dazu veranlassen, eines der Verfahren nach Anspruch 1-10 durchzuführen.

## Revendications

1. Procédé comprenant :
la diffusion (402), par un dispositif informatique (102), d'un message (122) sur un signal sans fil pour localiser une balise cible (114) ;
la réception (404), en réponse au message de diffusion, d'une pluralité de réponses intermédiaires (142, 144, 148) provenant d'une ou de plusieurs balises intermédiaires (108, 110, 112),
les une ou plusieurs balises intermédiaires comprenant des balises dans un ou plusieurs trajets de transmission entre le dispositif informatique et la balise cible ;
la détermination (406), par le dispositif informatique, d'une direction de premier saut et d'une distance de premier saut du dispositif informatique à au moins une balise intermédiaire de premier saut des une ou plusieurs balises intermédiaires en fonction de la pluralité de réponses intermédiaires, chaque balise intermédiaire de premier saut comprenant une première balise dans un trajet de transmission respectif entre le dispositif informatique et la balise cible ; et
la détermination (408), par le dispositif informatique, d'une distance de balise cible et d'une direction de balise cible du dispositif informatique à la balise cible en fonction de chaque direction de premier saut et de chaque distance de premier saut et de la pluralité de réponses intermédiaires provenant de chacune des une ou plusieurs balises intermédiaires, dans lequel au moins l'une de la pluralité de réponses intermédiaires provenant des une ou plusieurs balises intermédiaires comporte des données de portée associées à une distance de saut cible de la balise intermédiaire à la balise cible et des données de direction associées à une direction de saut cible de la balise intermédiaire à la balise cible.

2. Procédé selon la revendication 1, comprenant également :
la réception, en réponse au message (122), d'une réponse cible (140, 146) comportant des données de portée de la balise cible (114) à une balise intermédiaire (110, 112) ; et
la détermination, par le dispositif informatique (102), de la distance de balise cible et de la direction de balise cible du dispositif informatique à la balise cible en fonction de la réponse cible et de la pluralité de réponses intermédiaires (142, 144, 148) de chacune des une ou plusieurs balises intermédiaires.

3. Procédé selon l'une quelconque des revendications 1 et 2, comprenant également :
la détermination, par le dispositif informatique (102), de la distance de balise cible (114) et de chaque distance de premier saut à partir du dispositif informatique en fonction des temps d'aller-retour correspondants du signal sans fil vers et depuis le dispositif informatique vers la balise cible et chaque balise intermédiaire de premier saut.

4. Procédé selon l'une quelconque des revendications 1 à 3, comprenant également :
la détermination, par le dispositif informatique (102) avec les données de portée, de la distance de saut cible de chaque balise intermédiaire (108, 110, 112) à la balise cible (114) en fonction d'un temps d'aller-retour d'un second signal sans fil de chaque balise intermédiaire à la balise cible.

5. Procédé selon l'une quelconque des revendications 1 à 4, dans lequel le signal sans fil est un premier signal sans fil, le procédé comprenant également :
le chiffrement du message (122), le message chiffré comportant un identifiant de balise cible utilisé par chaque balise intermédiaire (108, 110, 112) pour transmettre un second message sur un second signal sans fil et configuré pour communiquer uniquement avec la balise cible.

6. Procédé selon l'une quelconque des revendications 1 à 5, comprenant également :
la sélection d'au moins deux balises intermédiaires (108, 110, 112) parmi la pluralité de balises intermédiaires pour déterminer la distance de balise cible (114) en fonction d'au moins l'une parmi une distance seuil de la balise cible à chacune de la pluralité de balises intermédiaires, ou une direction du dispositif informatique à chacune de la pluralité de balises intermédiaires.

7. Procédé selon l'une quelconque des revendications 1 à 6, dans lequel la réponse intermédiaire pour une ou plusieurs des balises intermédiaires (108, 110, 112) comporte également des données de portée associées à une distance de troisième saut de chaque balise intermédiaire de premier saut à une balise intermédiaire de deuxième saut, et la distance de saut cible de la deuxième balise intermédiaire à la balise cible.

8. Procédé selon l'une quelconque des revendications 1 à 7, dans lequel la détermination de la distance de balise cible (114) et de la direction de balise cible comporte également :
la détermination de la distance de balise cible et la direction de balise cible à partir du dispositif informatique (102) vers la balise cible en fonction de la pluralité de réponses intermédiaires (142, 144, 148) provenant de chacune des une ou plusieurs balises intermédiaires, dans lequel les réponses intermédiaires comportent une direction à partir d'une ou de plusieurs balises intermédiaires vers une autre balise intermédiaire et la balise cible.

9. Procédé selon l'une quelconque des revendications 1 à 8, dans lequel le signal sans fil et le second signal sans fil sont des signaux à bande ultra-large.

10. Procédé selon l'une quelconque des revendications 1 à 9, dans lequel un ou plusieurs trajets intermédiaires comportent une ou plusieurs balises intermédiaires (108, 110, 112) entre le dispositif informatique (102) et la balise cible (114) et un trajet direct du dispositif informatique à la balise cible, dans lequel la détermination de la distance de balise cible et de la direction de balise cible du dispositif informatique à la balise cible comprend également :
l'application, par le dispositif informatique, d'un algorithme de fonction de perte qui applique un poids à chaque terme d'un algorithme de fonction de perte d'équation pour déterminer la distance de balise cible et la direction de balise cible, dans lequel chaque terme de l'équation représente au moins l'un de chaque trajet intermédiaire parmi les un ou plusieurs trajets intermédiaires vers la balise cible ou le trajet direct vers la balise cible.

11. Dispositif informatique (102), comprenant :
un émetteur-récepteur sans fil (105) pour diffuser un message sur un signal sans fil afin de localiser une balise cible (114) ;
une mémoire ; et
un ou plusieurs processeurs couplés de manière opérationnelle à la mémoire et configurés pour exécuter le procédé selon une quelconque revendication précédente.

12. Support de stockage lisible par ordinateur non transitoire stockant des instructions qui, lorsqu'elles sont exécutées, amènent un ou plusieurs processeurs d'un dispositif informatique à exécuter l'un quelconque des procédés selon les revendications 1 à 10.
